# EUROPEAN PATENT APPLICATION

(11) **EP 4 848 053 A1**
(43) Date of publication of application: **02.12.2026**
(21) Application number: 25744950.4
(22) Date of filing: 17.01.2025
(51) Int. Cl.: G06F 3/0482, G06F 16/90, H04N 1/00

(54) **COMPUTER PROGRAM, INFORMATION PROCESSING DEVICE, AND INFORMATION PROCESSING METHOD**

(30) Priority: 25.01.2024 JP 2024009604
(71) Applicant: Canon Kabushiki Kaisha, Tokyo 146-8501 (JP)
(72) Inventor: SEKINE, Hiroshi, Tokyo 146-8501 (JP)
(74) Representative: TBK
(86) International application number: PCT/JP2025/001358
(87) International publication number: WO 2025/159021

(57) **Abstract**

A computer program causes a computer to function as: accepting means for accepting a request in natural language from a user, the request specifying a device and relating to an operation of the device; input means for inputting, to a language model server, a prompt that is based on the request, and operation information of the device; and providing means for providing the user with a response generated by the language model server based on the prompt and the operation information of the device, via a display unit.

## Description

### TECHNICAL FIELD

The present invention relates to a computer program, an information processing device, and an information processing method that utilize a natural language model.

### BACKGROUND ART

Among methods for operating devices via a network from a PC or the like, there is a method for operating the device from a remote UI. PTL 1 proposes a mechanism for improving operability of software used in device remote management technology. Further, services that provide information to a user in a natural language dialogue format using generative AI such as ChatGPT (registered trademark) are known.

### CITATION LIST

### PATENT LITERATURE

PTL1: Japanese Patent No. 5738388

### SUMMARY OF INVENTION

### TECHNICAL PROBLEM

However, the conventional technology has the following problems. The conventional technology allows device settings to be made from a web browser, but some devices have many setting items, requiring a cumbersome user operation. Further, the user needs to check manuals or the like to determine which items should be configured, and there is a problem that the user has to spend time figuring this out.

The present invention has been made in view of at least one of the above-mentioned problems, and provides a novel mechanism for supporting operation of a device using natural language.

### SOLUTION TO PROBLEM

The present invention is characterized by, for example, causing a computer to function as: accepting means for accepting a request in natural language from a user, the request specifying a device and relating to an operation of the device; input means for inputting, to a language model server, a prompt that is based on the request, and operation information of the device; and providing means for providing the user with a response generated by the language model server based on the prompt and the operation information of the device, via a display unit.

### ADVANTAGEOUS EFFECTS OF INVENTION

According to the present invention, it is possible to support the operation of the device using natural language.

### BRIEF DESCRIPTION OF DRAWINGS

FIG. 1 is a diagram illustrating an example of a system for operating an MFP 100 in a natural language dialogue format according to an embodiment.
FIG. 2 is a diagram illustrating an example of a hardware configuration of the MFP 100 according to the embodiment.
FIG. 3 is a diagram illustrating an example of a hardware configuration of a PC 400 according to the embodiment.
FIG. 4 is a diagram illustrating an example of a hardware configuration of a language model server 300 according to the embodiment.
FIG. 5 is a sequence diagram for changing settings of the MFP 100 according to the embodiment.
FIG. 6A is a flowchart illustrating a processing procedure of the PC 400 according to the embodiment.
FIG. 6B is a flowchart illustrating the processing procedure of the PC 400 according to the embodiment.
FIG. 7A is a flowchart illustrating a processing procedure of the MFP 100 according to the embodiment.
FIG. 7B is a flowchart illustrating the processing procedure of the MFP 100 according to the embodiment.
FIG. 8 is a diagram illustrating an example of a screen displayed on a display unit 410 by an agent program 413 of the PC 400 according to the embodiment.
FIG. 9A is a diagram illustrating an example of a part of data in a data storage 414 deployed in a RAM 404 of the PC 400 according to the embodiment.
FIG. 9B is a diagram illustrating an example of a part of the data in the data storage 414 deployed in the RAM 404 of the PC 400 according to the embodiment.
FIG. 10A is a diagram illustrating an example of a prompt generated by the agent program 413 of the PC 400 according to the embodiment and transmitted to the language model server 300.
FIG. 10B is a diagram illustrating an example of the prompt generated by the agent program 413 of the PC 400 according to the embodiment and transmitted to the language model server 300.
FIG. 11 is a diagram illustrating an example of a response of the language model server 300 to the prompt transmitted by the PC 400 according to the embodiment.
FIG. 12 is a diagram illustrating an example of an API generated by an API generation/execution program 415 for the MFP 100 according to the embodiment.
FIG. 13A is a flowchart illustrating the processing procedure of the PC 400 according to the embodiment.
FIG. 13B is a flowchart illustrating the processing procedure of the PC 400 according to the embodiment.
FIG. 13C is a flowchart illustrating the processing procedure of the PC 400 according to the embodiment.
FIG. 14 is a diagram illustrating an example of a screen displayed on the display unit 410 by the agent program 413 of the PC 400 according to the embodiment.
FIG. 15A is a diagram illustrating an example of the response of the language model server 300 to the prompt transmitted by the PC 400 according to the embodiment.
FIG. 15B is a diagram illustrating an example of the response of the language model server 300 to the prompt transmitted by the PC 400 according to the embodiment.
FIG. 16 is a sequence diagram for investigating a cause of an error or warning of the MFP 100 according to the embodiment.
FIG. 17 is a diagram illustrating an example of the screen displayed on the display unit 410 by the agent program 413 of the PC 400 according to the embodiment.
FIG. 18A is a diagram illustrating a method for switching a display language from a display unit 210 of the MFP 100 according to the embodiment.
FIG. 18B is a diagram illustrating the method for switching the display language from the display unit 210 of the MFP 100 according to the embodiment.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### <First Embodiment>

### <System configuration>

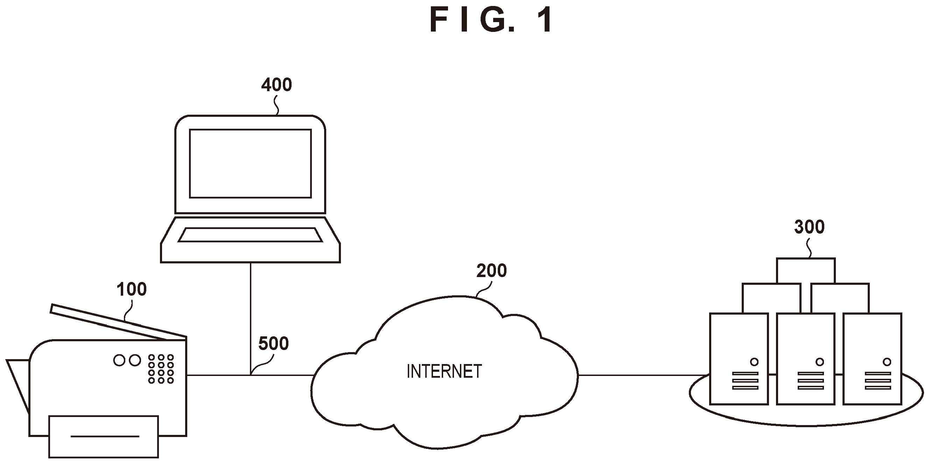

A first embodiment of the present invention will be described below. Referring to FIG. 1, an example of a system for operating an MFP 100 in a natural language dialogue format according to the present embodiment will be described.

In this system, the MFP 100, which is an image processing device, and a PC 400, which is an information processing device, are connected via a network 500, and a language model server 300, which is a server device, is further connected via the Internet 200. The present invention supports a setting operation of the MFP 100 in a natural language dialogue format when remotely controlling the MFP 100 from the PC 400 or the like in such a system configuration. However, the present invention is not intended to be limited to the system, and in another example, some functions of the PC may be provided via the Internet 200. Further, a configuration of this system is not intended to be limited to a device configuration illustrated in FIG. 1, and may include other devices. In the present embodiment, the MFP 100 is used as an example of an image processing device, but the present invention can be applied to any device having at least one of an image forming function and an image reading function.

### <Configuration of MFP>

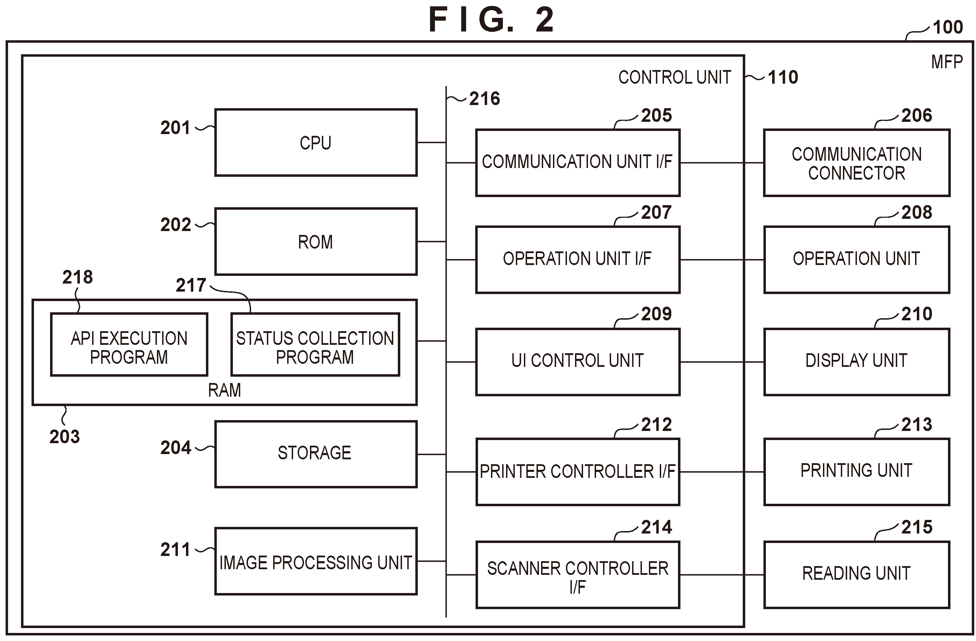

Referring to FIG. 2, an example of a hardware configuration of the MFP 100 according to the present embodiment will be described. The MFP 100 includes a control unit 110, a communication connector 206, an operation unit 208, a display unit 210, a printing unit 213, and a reading unit 215. The control unit 110 includes a CPU 201, a ROM 202, a RAM 203, a storage 204, a communication unit I/F 205, an operation unit I/F 207, a UI control unit 209, a printer controller I/F 212, and a scanner controller I/F 214.

The CPU 201 controls an overall operation of the MFP 100. The CPU 201 reads control programs stored in the ROM 202 or the storage 204 and executes various controls such as read control and print control. The ROM 202 stores a boot program for deploying a control program mainly stored in the storage 204 and executable by the CPU 201 to the RAM 203. The RAM 203 is a main memory of the CPU 201 and is used as a work area and as a temporary storage area for deploying various control programs stored in the ROM 202 and the storage 204. The storage 204 stores print data, image data, various programs, and various setting information in addition to executable control programs. Note that in the MFP 100 of the present embodiment, one CPU 201 uses one memory (RAM 203) to execute each process illustrated in a flowchart described later, but other configurations may also be adopted. For example, a plurality of CPUs, RAMs, ROMs, and storages can cooperate to execute each process illustrated in the flowchart described later. Alternatively, some processing may be executed using hardware circuits such as an application specific integrated circuit (ASIC) or a field-programmable gate array (FPGA).

The operation unit I/F 207 is connected to the operation unit 208. The operation unit 208 can be configured to include a touch panel input device, a push-button, or the like. The scanner controller I/F 214 is connected to the reading unit 215. The reading unit 215 reads an image on a sheet and generates the image data. The image data generated by the reading unit 215 is transmitted to an external device or printed on a sheet. Further, the reading unit 215 can also read a plurality of documents by feed-scanning sheets placed on a document feeder (not illustrated).

The printing unit 213 is connected to the printer controller I/F 212. The image data to be printed is transferred to the printing unit 213 via the printer controller I/F 212. The printing unit 213 receives a control command and the image data to be printed, and prints the image based on the image data onto the sheet. A printing method of the printing unit 213 may be an electrophotographic method or an inkjet method. In the case of the electrophotographic method, an electrostatic latent image is formed on a photoreceptor, then developed with toner, the toner image is transferred to the sheet, and the transferred toner image is fixed to form the image. On the other hand, in the case of the inkjet method, ink is ejected to print the image onto the sheet.

Further, the MFP 100 is connected to the network 500 via the communication connector 206 connected to the communication unit I/F 205. The communication unit I/F 205 is connected to the PC 400 on the network 500 and the Internet 200. The UI control unit 209 is connected to the display unit 210 such as an LCD and controls the display unit. The image processing unit 211 performs rotation, compression, resolution conversion, and the like of the image data output to the printing unit 213 via the printer controller I/F 212. These modules are connected to each other via a system bus 216 to exchange data.

Examples of programs deployed in the RAM 203 and executed by the CPU 201 include a status collection program 217 and an API execution program 218. The status collection program 217 is a program that collects status information from each module connected via the system bus 216, receives a setting command from the PC described later via the communication connector 206 and the communication unit I/F 205, and executes the setting command. The API execution program 218 executes the command received via the communication connector 206 and the communication unit I/F 205.

### <PC configuration>

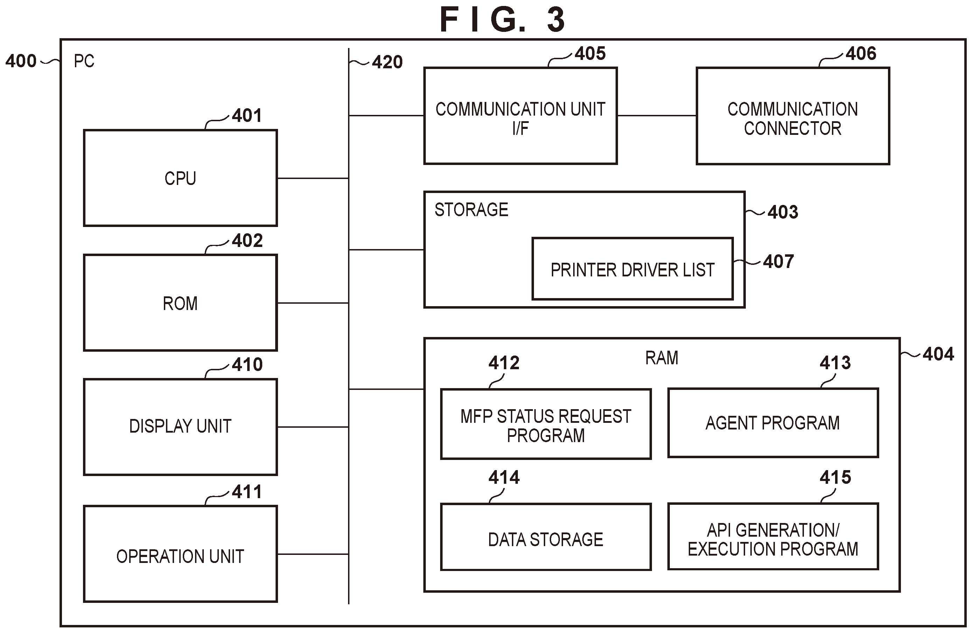

Referring to FIG. 3, a hardware configuration of the PC 400 according to the present embodiment will be described. The PC 400 includes a CPU 401, a ROM 402, a storage 403, a RAM 404, a communication unit I/F 405, a communication connector 406, a display unit 410, and an operation unit 411.

The CPU 401 controls the entire PC 400. The CPU 401 directly reads and executes a program stored in the ROM 402 or the storage 403, or deploys the program in the RAM 404 and executes the program. The communication unit I/F 405 transmits data generated by the CPU 401 to the MFP 100 and the language model server 300 via the network 500 connected to the communication connector 406 or the Internet 200, under control of the CPU 401. Further, the communication unit I/F 405 receives data from the MFP 100 and the language model server 300 via the network 500 or the Internet 200. The display unit 410 controls the LCD or the like to display an operation screen and the like to a user. The operation unit 411 accepts input operations from the user, such as a setting change request for and question on the MFP 100. These modules are connected to each other via a system bus 420.

The storage 403 stores a printer driver list 407 in which a plurality of printer drivers that operate the MFP 100 and the like that have been installed in advance are listed. The printer driver list 407 is read and used by the CPU 401, and an agent program 413 described later can specify which MFP the setting change request and the question pertains to by a user operation.

The RAM 404 stores an MFP status request program 412, the agent program 413, a data storage 414, and an API generation/execution program 415, which are deployed from the storage 403 by the CPU 401. The data storage 414 stores an instruction manual described later for each MFP model. The stored format may be a text format or a known format searchable using a cosine similarity index. The agent program 413 accepts the question on and the setting change request for the MFP 100 in natural language by the user from the operation unit 411. Further, the agent program 413 requests the MFP status request program 412 to query an MFP, which has been previously set from the printer driver list 407, for error information, current setting information, or the like. Furthermore, the agent program 413 searches for relevant information from information stored in the data storage 414 based on the question and the setting change request from the user, and transmits a search result along with information on the question and the setting change request from the user, in natural language to the language model server 300 described later. The API generation/execution program 415 is a program that generates a command that can be executed by the MFP 100 from a response from the language model server 300 and issues an execution request to the MFP 100.

### <Configuration of language model server>

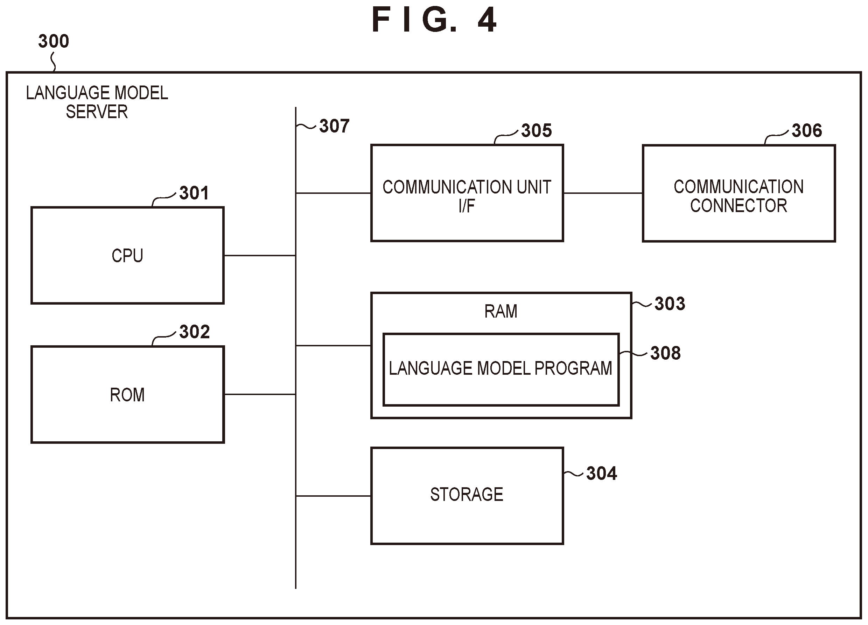

Referring to FIG. 4, a hardware configuration of the language model server 300 according to the present embodiment will be described. The language model server 300 includes a CPU 301, a ROM 302, a RAM 303, a storage 304, a communication unit I/F 305, and a communication connector 306.

The CPU 301 controls the entire language model server 300. The CPU 301 directly reads and executes a program stored in the ROM 302 or the storage 304, or deploys the program in the RAM 303 and then reads and executes the program. The communication unit I/F 305 transmits data generated by the CPU 301 to the MFP 100 and the PC 400 connected to the network 500 via the communication connector 306 under control of the CPU 301. Further, the communication unit I/F 305 receives data from the MFP 100 and the PC 400 connected to the network 500 via the communication connector 306. These modules are connected to each other via the system bus 307, so that the data can be sent and received from each other. A language model program 308 deployed in the RAM 303 is a known arbitrary program that returns an appropriate response in natural language from natural language information received from the PC 400 via the communication connector 306 and the communication unit 305 through the Internet 200.

### <Setting change sequence>

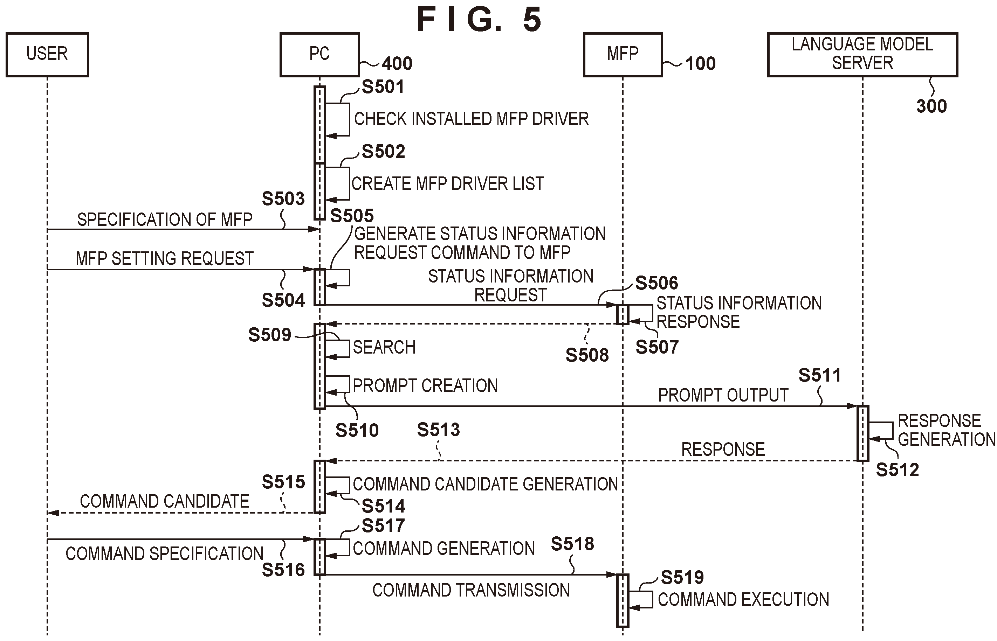

Referring to FIG. 5, an example of a setting change sequence of the MFP 100 according to the present embodiment will be described. "S" in the figure indicates a step, and the following number indicates a step number. The same applies to subsequent drawings. Note that in the following, for the sake of simplicity, various programs will be described as executing the processing as subjects, but this processing is realized by the CPU reading and executing the program.

When the agent program 413 starts on the PC 400, in S501, the agent program 413 accesses the printer driver list 407 to check an MFP driver. Furthermore, in S502, the agent program 413 creates a list of drivers that the user can operate based on the accessed printer driver list 407.

In S503, the PC 400 accepts, from the user, selection of the MFP whose settings to be changed from the list of drivers created in S502. Here, the selection of the MFP means selecting the MFP to be a setting change target from among a plurality of MFPs connected via the Internet 200 or the network 500. Furthermore, in S504, the PC 400 accepts a request from the user to change settings for the MFP specified in S503 using natural language. In S505, the MFP status request program 412 of the PC 400 generates a command to request a status of the MFP for the MFP requested by the user in S504. In S506, the MFP status request program 412 transmits a status request command to the MFP 100 specified by the user in S503. Upon accepting the status request command, the MFP 100 collects its own status information and setting status (status information) in S507 and returns it to the PC 400 in S508.

In S509, the agent program 413 selects data of a specified MFP type from a list of MFP models in the data storage 414 based on a setting request requested in S504 and the MFP specified in S503, and searches for similar information within the data. The search here, for example, if the setting request is "Change display language to English", involves searching for items matching "display", "language", "English", and "change". Next, in S510, the agent program 413 generates a prompt to query the language model server 300. In S511, the agent program 413 transmits the prompt generated in S510 to the language model server 300.

In S512, the language model program 308 of the language model server 300 receives the prompt generated in S510 via the communication connector 306 and the communication unit I/F 305, and generates the response. In S513, the language model program 308 transmits the response generated in S512 back to the PC 400. In S514, the agent program 413 creates command candidates that the user can operate based on the received response. Further, the agent program 413 generates a screen, and in S515, displays the screen on the display unit 410.

The user specifies a command from the command candidates displayed on the display unit 410 using the operation unit 411. In S516, the agent program 413 accepts command specification of the user. If there is no command the user expects, the agent program responds accordingly and terminates. In S517, the API generation/execution program 415 of the PC 400 creates a command for setting change or the like for the MFP from the command specified in S516, and transmits the command to the MFP 100 in S518. In S519, the MFP 100 executes the received command using the API execution program 218 and performs the setting change.

### <Processing flow of PC 400>

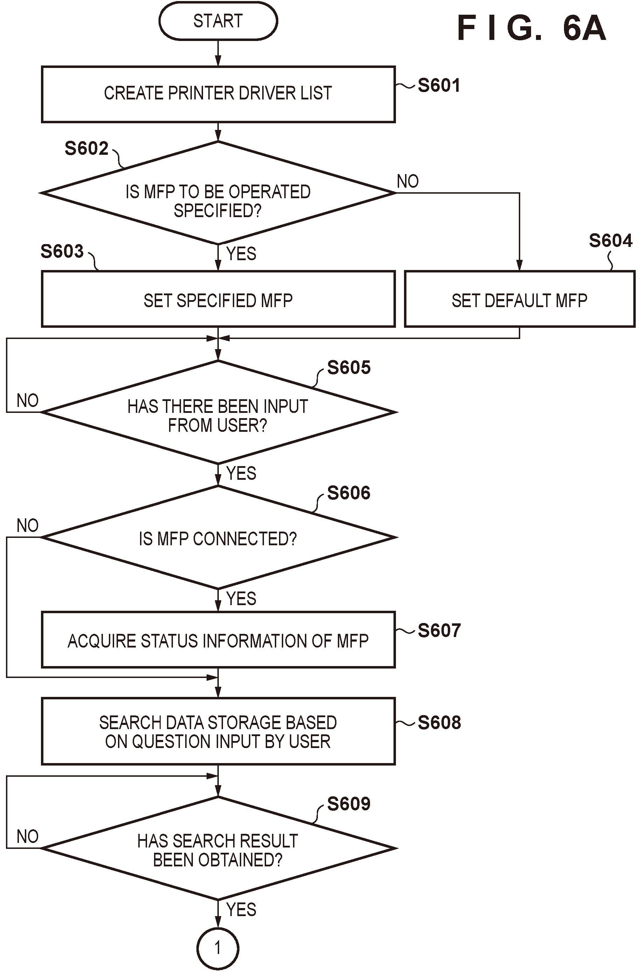

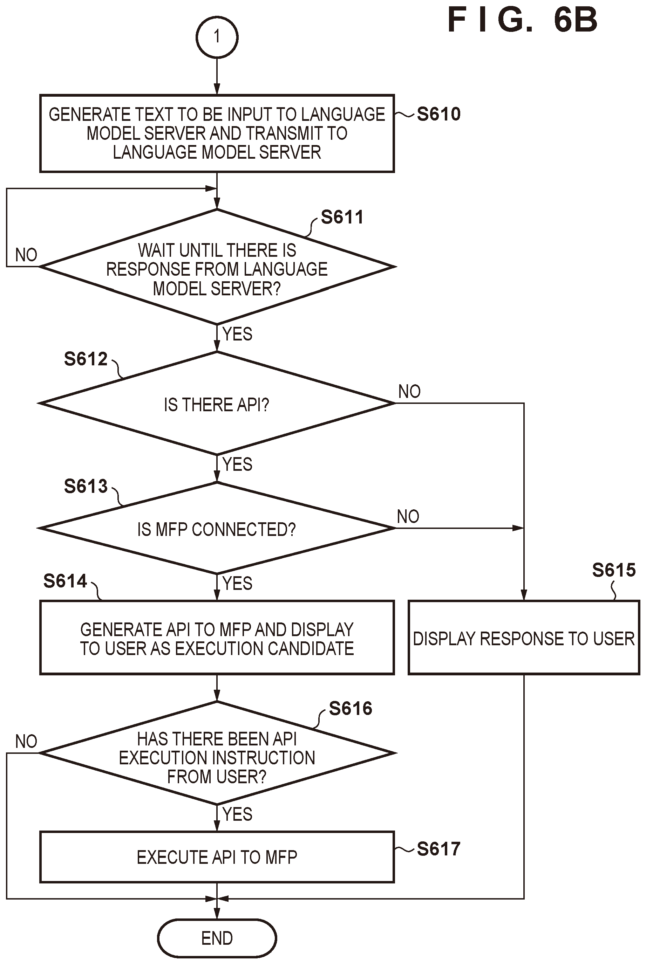

Referring to FIGS. 6A and 6B, a processing procedure of the PC 400 according to the present embodiment will be described. The processing described below is realized, for example, by the CPU 401 reading the program stored in the ROM 402 or the storage 403 into the RAM 404 and executing the program. Note that in the following, for the sake of simplicity, various programs executed by the CPU 401 may also be described as operating subjects.

In S601, the agent program 413 accesses the printer driver list 407 and creates the list of drivers that the user can operate. In S602, the agent program 413 determines whether the MFP to be operated by the user is specified in the list of drivers by the user. If the MFP is specified in the list of drivers, the agent program 413 proceeds to S603, sets the specified MFP, and proceeds to S605. On the other hand, if the MFP is not specified, the agent program 413 proceeds to S604, specifies a default MFP, and proceeds to S605.

In S605, the agent program 413 determines whether the user has input the setting request or the question (in natural language). If the agent program 413 receives the input, it proceeds to S606, and checks whether the MFP set in S603 and S604 is connected via the MFP status request program 412 executed by the CPU 401. If the MFP is connected, the agent program 413 proceeds to S607, and the MFP status request program 412 transmits a status request to the MFP 100 via the network 500. Upon receiving the status request, the MFP 100 causes the CPU 201 to execute the status collection program 217 to collect the status and return it to the PC 400. Thus, the status collection program 217 acquires the status and proceeds to S608. On the other hand, in S606, if the MFP specified by the user is not connected, the agent program 413 proceeds to S608.

In S608, the agent program 413 searches for data related to setting change instruction or question input by the user from among data corresponding to the MFP specified in S603 or S604, stored in the data storage 414. The search method may be any search method. Subsequently, in S609, the agent program 413 waits until it obtains the search result executed in S608. Upon obtaining the search result, in S610, the agent program 413 creates a prompt (text) to be input to the language model server 300, and transmits the prompt and the data obtained by search to the language model server 300 via the Internet 200. Here, the prompt to be transmitted is a prompt generated based on the setting request or question input by the user. For example, if the user inputs the setting request to change the display language of the MFP 100 to English, description for changing display language setting is searched from among manual data, which is operation information of the MFP 100, stored in the data storage 408. Then, the manual data (including API identification information), in which the corresponding description is described, is then transmitted to the language model server 300 along with the generated prompt. At this time, the generated prompt is a prompt like "Manual data related to the display language of the MFP has been input. Please refer to the manual data, and output how to change the display language of the MFP to English. Further, please identify an API corresponding to the method from the manual data and output it".

Note that the API identification information included in the manual data may be an ID that corresponds one-to-one with a plurality of APIs, or may be a command or URL for executing the API.

Note that search processing in S608 may not be executed, and all manual data corresponding to the MFP specified in S603 or S604 may be transmitted to the language model server 300. In this case, the prompt generated in S610 is a prompt like "Manual data of the MFP has been input. Please refer to description about changing the display language in the manual data, and output how to change the display language of the MFP to English. Further, please identify an API corresponding to the method from the manual data and output it".

The language model server 300 outputs an optimal response based on the received prompt and the manual data, and transmits it to the PC 400.

In S611, the agent program 413 waits until it receives a response from the language model server 300, and if it receives the response, in S612, it determines whether there is an API that the MFP 100 can execute in the response. If there is the corresponding API, the processing proceeds to S613, and if there is no corresponding API, the processing proceeds to S615, and the agent program 413 displays on the display unit 410 that there is no corresponding API, presents the response to the user, and terminates the processing of this flowchart.

Note that determination processing in S612 and S613 may not be performed, and if it is YES in S611, processing in S615 may be always executed. Further, the response in the processing in S615 may not be displayed on the display unit 410. For example, the PC 400 may transmit the response to the MFP 100 so that the response is displayed on the display unit 210 of the MFP 100, and the response may be provided to the user via the display unit.

On the other hand, in S613, the agent program 413 checks whether the MFP set in S603 and S604 is connected via the MFP status request program 412 executed by the CPU 401. If the MFP is not connected, the processing proceeds to S616, the agent program 413 displays on the display unit 410 that the API cannot be executed, presents the user only with the response from the language model server, and terminates the processing of this flowchart.

If it is determined in S613 that the MFP is connected, the processing proceeds to S614. In S614, the agent program 413 generates an API that can be executed by the API execution program 218 of the MFP 100 via the network 500 by the API generation/execution program 415 using the response from the language model server 300. Furthermore, the agent program 413 displays the generated API as a candidate for execution on the display unit 410. In S617, the agent program 413 determines whether the user has instructed execution of the API. If the execution has been instructed, the processing proceeds to S618, and the API generation/execution program 415 transmits the API to the MFP 100 via the network 500, and terminates the processing of this flowchart. On the other hand, if the execution has not been instructed by the user, the API generation/execution program 415 directly terminates the processing of this flowchart.

### <Processing flow of MFP 100>

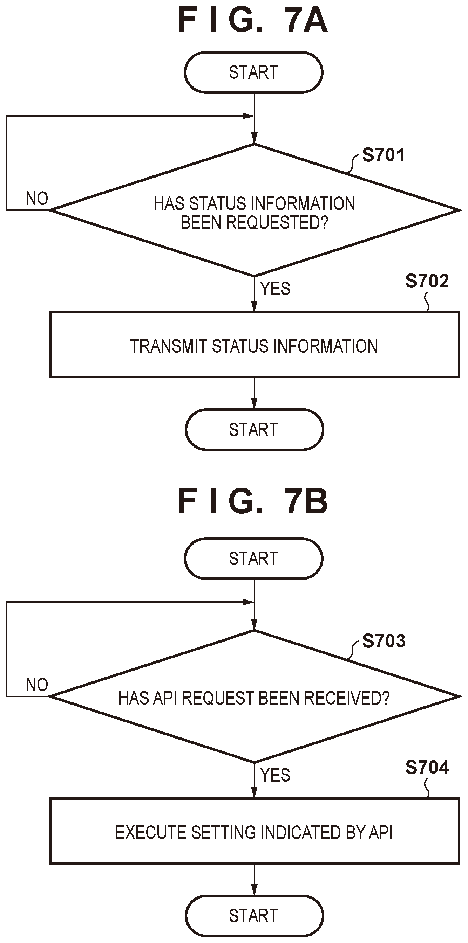

Referring to FIGS. 7A and 7B, a processing procedure of the MFP 100 according to the present embodiment will be described. The processing described below is realized, for example, by the CPU 201 reading the program stored in the ROM 202 and the storage 204 into the RAM 203 and executing the program. Note that in the following, for the sake of simplicity, various programs executed by the CPU 201 may also be described as operating subjects.

FIG. 7A illustrates the processing procedure when the MFP 100 receives the status request from the MFP status request program 412 of the PC 400 via the network 500. In S701, the CPU 201 waits until it receives the status request from the PC 400. Upon receiving the status request, in S702, the status collection program 217 collects statuses including the setting status, errors, and warnings of the MFP 100, transmits them as the status information to the PC 400 via the network 500, and terminates the processing of this flowchart. By using the collected status information in this way to provide the response to the request of the user, support can be provided according to the current situation. For example, it is possible to check the current settings, and it is also possible to provide information such as errors and warnings of the device, and a method for dealing with the errors and warnings.

FIG. 7B illustrates the processing procedure when the MFP 100 receives an API transmission from the API generation/execution program 415 of the PC 400 via the network 500. In S703, the CPU 201 waits until it receives an API request from the API generation/execution program 415 of the PC 400 via the network 500. Upon accepting the API request, in S704, the API execution program 218 performs operations such as changing operating settings according to the content of the requested API, and terminates the processing of this flowchart.

### <Screen example>

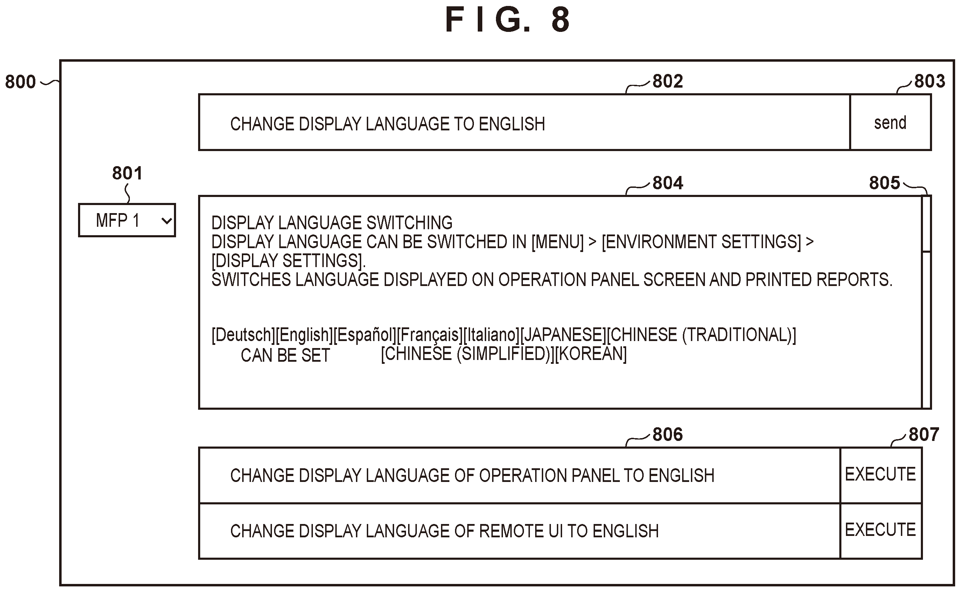

Referring to FIG. 8, a screen example displayed on the display unit 410 by the agent program 413 of the PC 400 according to the present embodiment will be described. A screen 800 is configured to include an MFP selection item 801, a prompt input item 802, a prompt transmission button 803, a response field 804, a slider bar 805, an API candidate field 806, and an API execution button 807. The screen 800 is an interactive screen that communicates with the user using natural language.

The MFP selection item 801 is a selection item in the driver list based on the printer driver list 407, and the MFP to be operated is specified from options according to the user operation. The prompt input item 802 is an item where the user inputs the setting change and the question on the MFP 100 in natural language. Thus, the MFP selection item 801 and the prompt input item 802 are examples of reception means. When the prompt transmission button (object) 803 is operated, the agent program 413 selects the MFP data that is set in the MFP selection item 801 from the data storage 414 and searches for the relevant item within the MFP data. The search method may be any search method. Furthermore, the agent program 413 creates a request to generate the API along with the search results, and the setting change and the question input in the prompt input item 802 by the user, and transmits it to the language model server 300.

The response field 804 is a response field displaying the response from the language model server 300, and a display area can be changed (scrolled) using the slider bar 805. The API candidate field 806 is an item for clearly displaying a command that the API generation/execution program 415 generates from the response from the language model server 300, and the MFP 100 can execute via the network 500, to the user as the candidate for execution. When the user operates the API execution button (object) 807, the API generation/execution program 415 executes the selected command on the MFP 100. In this way, according to the present embodiment, in addition to providing an operation method, it is possible to provide an API for executing the operation method. This allows the user to achieve a desired operation simply by selecting and executing the API, without executing the provided operation method. It is also possible to display a plurality of candidates in the API candidate field 806. In this way, a plurality of options related to the request from the user can be provided, and an API that better meets the request of the user can be provided.

### <Data storage>

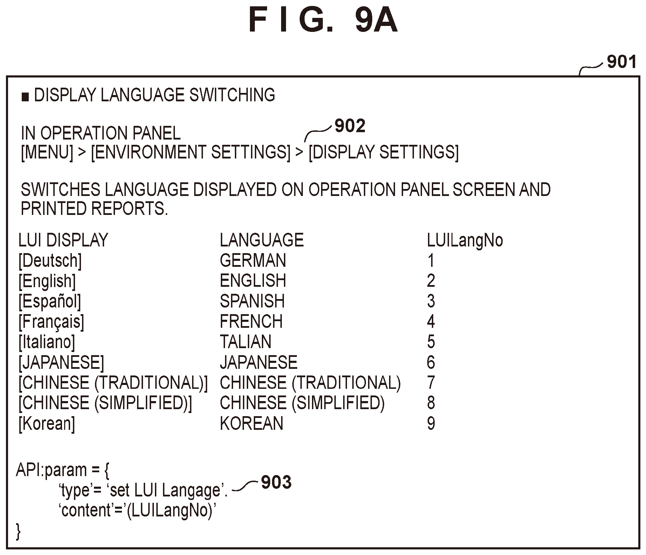

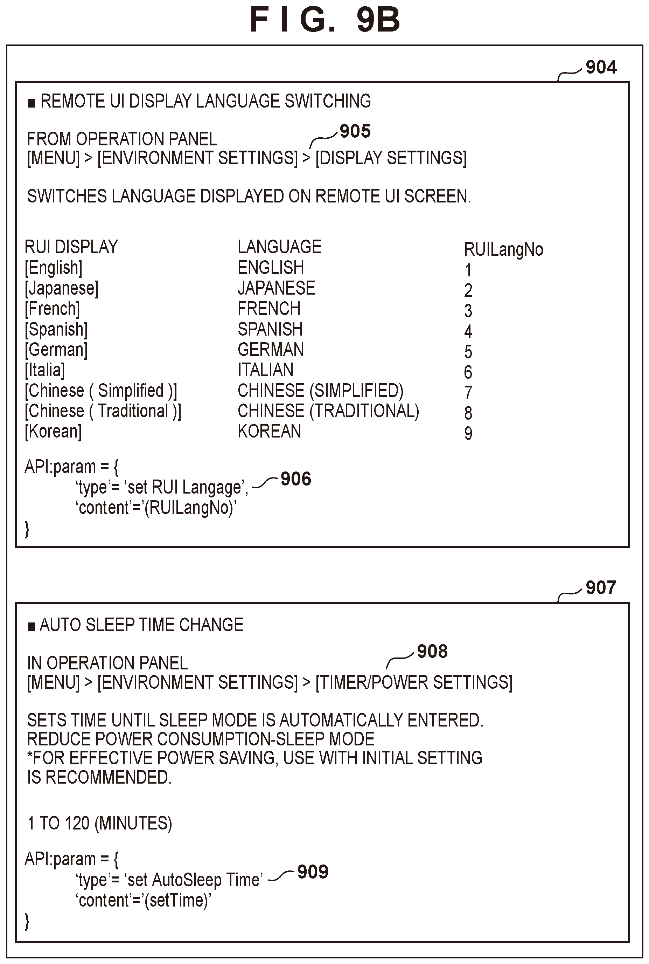

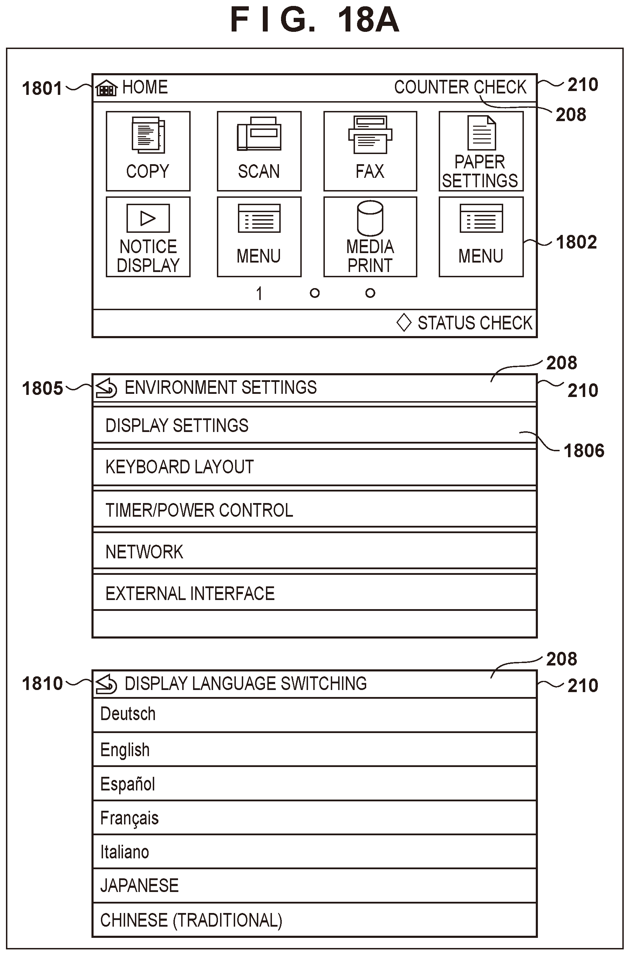

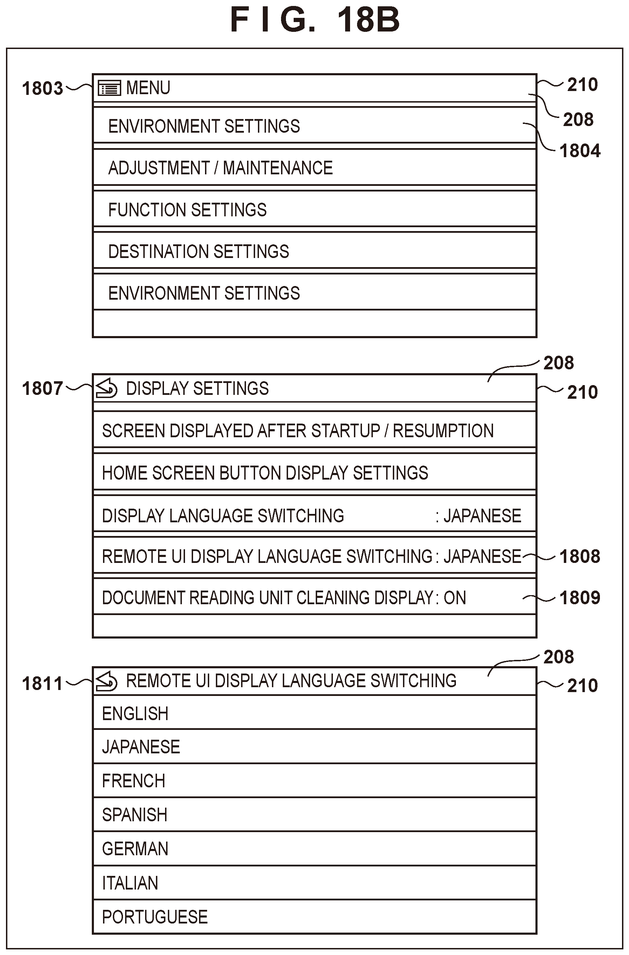

Referring to FIGS. 9A and 9B, a part of the data in the data storage 414 deployed in the RAM 404 of the PC 400 according to the present embodiment will be described. The data illustrated in FIGS. 9A and 9B is for illustrative purposes and does not necessarily represent an actual data structure. In the present invention, the data content described below may be managed in an arbitrary data structure. The data storage 414 is an example of storage means and stores operation information for a plurality of devices communicably connected to the network 500. As the operation information, the operation method and its description (manual) for each device, and information on the API for executing the operation method are stored for every operation items. Details of the operation information will be described below. Here, the operation items correspond to setting items described later using FIG. 18, and include, for example, various settings such as screen settings displayed after startup/resumption, home screen button display settings, display language switching settings, and document reading unit cleaning display settings. In the present invention, by storing a manual or the like of an image processing device such as the MFP in the data storage 414 of the PC 400 that is the information processing device, operation support can be easily provided in an interactive format. Note that the operation information and the like may be stored in an external server device or the like.

A display language switching description item 901 is an item describing changing the display language setting of the MFP 100. A numeral 902 describes a method for switching the display language, and an operation method for switching and its explanation are described. A numeral 903 describes a template for a display language switching API, and is an example of a template for the language model server 300 to generate a command that the API generation/execution program 415 of the PC 400 can execute on the MFP 100.

A remote UI display language switching description item 904 is an item describing changing remote UI display language of the MFP 100. A numeral 905 describes a method for switching the remote UI display language, and the operation method for switching the remote UI display language and its explanation are described. A numeral 906 describes a template for a remote UI display language switching API, and similar to the template 903, is an example of a template for the language model server 300 to generate a command that the API generation/execution program 415 of the PC 400 can execute on the MFP 100.

An auto sleep time setting change description item 907 is an item describing changing auto sleep time setting of the MFP 100. A numeral 908 describes a method for changing the auto sleep time setting, and the method for changing the auto sleep time setting and its explanation are described. A numeral 909 describes a template for an auto sleep time setting change API, and is an example of a template for the language model server 300 to generate a command that the API generation/execution program 415 of the PC 400 can execute on the MFP 100.

Although data examples according to the present embodiment have been described above, the present invention is not intended to be limited to the above-described form. For example, the data may be in a vectorized form that allows for cosine similarity searching.

### <Prompt>

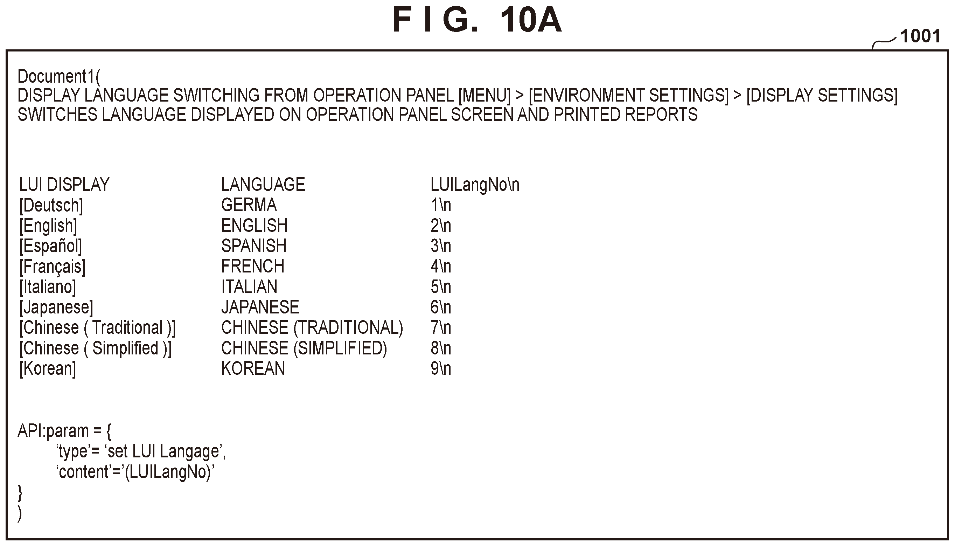

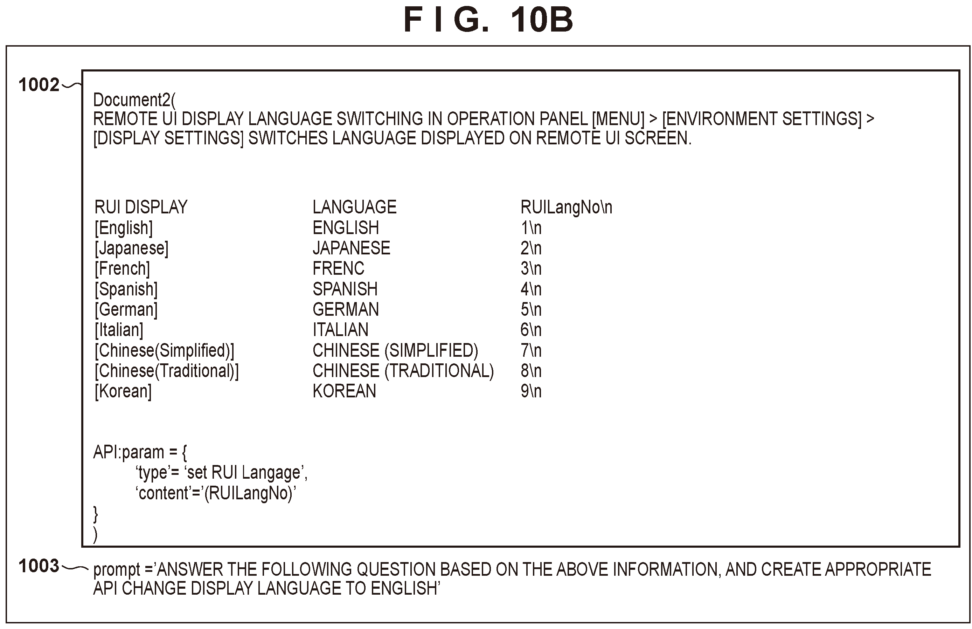

Referring to FIGS. 10A and 10B, an example of a prompt generated by the agent program 413 of the PC 400 according to the present embodiment and transmitted to the language model server 300 will be described.

A first input document 1001 and a second input document 1002 are results searched by the agent program 413 in S509, and the present embodiment describes an example where two documents were found, but there may be one document, or three or more documents. Further, the search result may be zero. If the search result is zero, the agent program 413 displays the search result to the user on the display unit 410 and terminates the search.

An instruction document 1003 is an example of an instruction document that is generated by the agent program 413 of the PC 400 and transmitted to the language model server 300. The content of the instruction document is a request to create the API to perform the setting change on the MFP 100, which has been input by the user in the prompt input item 802, based on the first input document 1001 and the second input document 1002.

### <Response example >

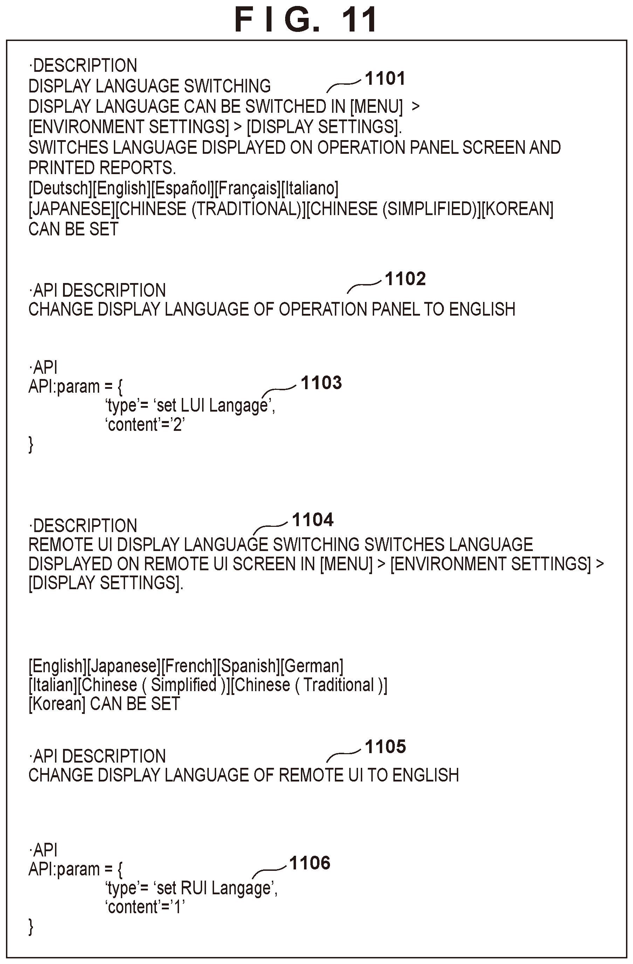

Referring to FIG. 11, a response example from the language model server 300 to the prompt transmitted by the PC 400 according to the present embodiment will be described.

Description 1101 in response to the first input document 1001 describes a method of changing the display language switching settings. The description 1101 is received by the agent program 413 of the PC 400 via the communication connector 406 and the communication unit I/F 405, and the CPU 401 displays the description 1101 in the response field 804 by the display unit 410. API description 1102 describes what settings will be changed to when the PC 400 executes an API candidate 1103. The API description 1102 is received by the agent program 413 of the PC 400 via the communication connector 406 and the communication unit I/F 405, and the CPU 401 operates the display unit 410 to display the API description 1102 in the API candidate field 806. The API candidate 1103 is used by the API generation/execution program 415 of the PC 400 to generate an operation API that can be executed by the MFP 100 according to this description.

Similarly, description 1104 in response to a second input document 1004 describes a method of changing remote UI display language switching settings. API description 1105 describes what settings will be changed to when the PC 400 executes an API candidate 1106. The API candidate 1106 is used by the API generation/execution program 415 of the PC 400 to generate the operation API that can be executed by the MFP 100 according to this description.

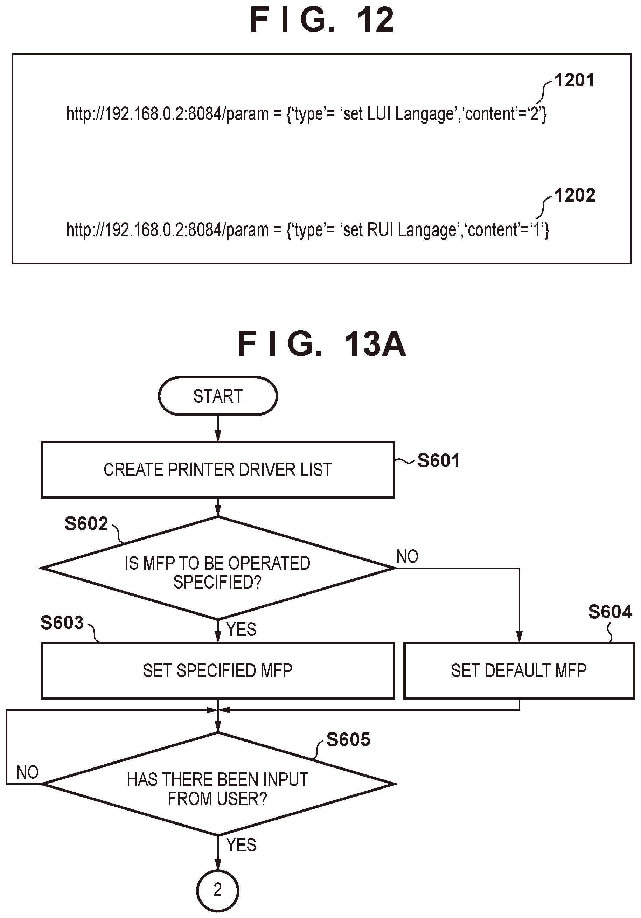

FIG. 12 illustrates an example of the API generated by the API generation/execution program 415 for the MFP 100 in S614. An API 1201 is an API generated by the API generation/execution program 415 according to the API candidate 1103 received from the language model server 300 so that the MFP 100 can execute the API. Similarly, an API 1202 is an example of an operation API generated by the API generation/execution program 415 according to the API candidate 1106.

### <Switching of display language>

Referring to FIGS. 18A and 18B, an operation example of switching the display language from the display unit 210 of the MFP 100 according to the present embodiment will be described. A home screen 1801 is displayed on the display unit 210 of the MFP 100. The display unit 210 is covered by the operation unit 208 such as a touch panel. The home screen 1801 displays various function icons in a selectable manner, and includes a menu icon 1802.

When the user operates the menu icon 1802 on the screen 1801, the operation unit 208 transmits a pressed coordinate to the CPU 201 via the operation unit I/F 207. Upon receiving the coordinate, the CPU 201 runs a display program (not illustrated) and displays a menu screen 1803 on the display unit 210 via the UI control unit 209. Various setting items are displayed on the menu screen 1803 in a selectable manner. When an environment setting button 1804 on the menu screen 1803 is operated, an environment setting screen 1805 is displayed.

The environment setting screen 1805 displays various setting items related to environment settings in a selectable manner. When a display setting button 1806 on the environment setting screen 1805 is operated, the screen transitions to a display setting screen 1807. The display setting screen 1807 displays various setting items related to display settings in a selectable manner. In particular, the display setting screen 1807 includes a display language switching button 1808 and a remote UI display language switching button 1809. When the display language switching button 1808 is operated, the screen transitions to a display language selection screen 1810, and when the remote UI display language switching button 1809 is operated, the screen transitions to a remote UI display language selection screen 1811.

The display language selection screen 1810 displays various selectable languages, and when a language to be displayed on the display unit 210 is selected, a language on a display screen of the display unit 210 switches to the selected language. Similarly, the remote UI display language selection screen 1811 displays various selectable languages, and when a language to be displayed on the remote UI is selected, a display language of a remote UI (not illustrated) is displayed in the selected language.

As described above, a computer program according to the present embodiment causes a computer to function to accept a request in natural language from the user, the request specifying a device and relating to an operation of the device. Further, the computer program functions to cause the computer to input a prompt that is based on the request, and operation information of the device, to the language model server. Further, the computer program causes the computer to function to provide the user with a response generated by the language model server based on the prompt and the operation information of the device, via the display unit. In this way, the present embodiment can provide a novel mechanism for supporting the operation of the device, for example, in a natural language dialogue format. Further, according to the present invention, when the MFP that is the device is remotely operated from the information processing device that is the external device, the user operation can be supported in an interactive format. This can eliminate the need for the user to read the manual or the like, and provide a more user-friendly operation system.

### <Second Embodiment>

### <Processing flow of PC 400>

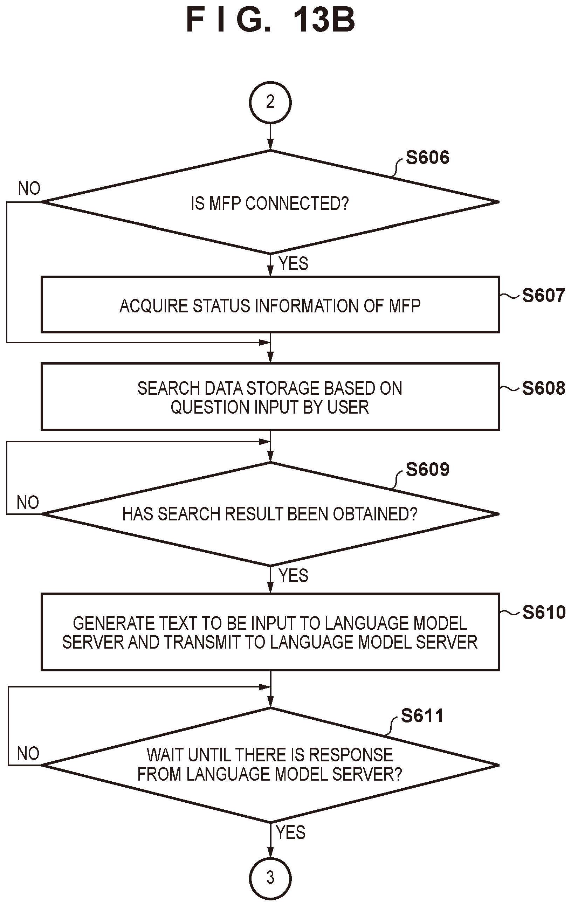

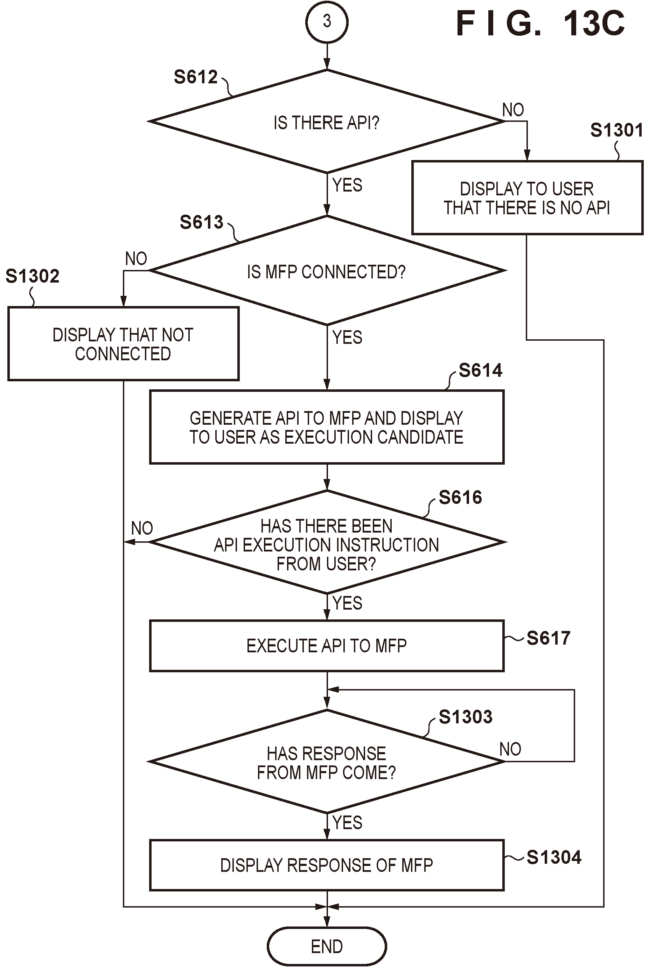

A second embodiment of the present invention will be described below. The present embodiment is an example including processing for checking the setting status of the MFP 100. The processing flow of the PC 400 of the present embodiment will be described with reference to FIGS. 13A to 13C. The processing described below are realized, for example, by the CPU 401 reading the program stored in the ROM 402 or the storage 403 into the RAM 404 and executing the program. In the following, for the sake of simplicity, various programs executed by the CPU 401 may also be described as operating subjects. Note that the control similar to those in the flowcharts of FIGS. 6A and 6B are denoted by the same step numbers, and the descriptions are omitted.

If it is determined in S612 that there is no API (in the present embodiment, a setting confirmation API), in S1301, the agent program 413 displays on the display unit 410 that there is no corresponding API, presents the response to the user, and terminates the processing of this flowchart. Further, if it is determined in S613 that the MFP is not connected, the processing proceeds to S1302. In S1302, the agent program 413 displays on the display unit 410 that the API cannot be executed because the MFP is not connected, presents the user only with the response from the language model server 300, and terminates the processing of this flowchart. On the other hand, if it is determined that the MFP is connected, the processing proceeds to S614. In S614, based on the response from the language model server 300, the API generation/execution program 415 generates a setting confirmation API for execution of the API execution program 218 of the MFP 100, and displays it on the display unit 410 as the candidate for execution.

In S616, the agent program 413 determines whether the user has instructed execution of the setting confirmation API. If the execution has been instructed, the processing proceeds to S1303, and the API generation/execution program 415 transmits the setting confirmation API to the MFP 100 via the network 500. On the other hand, if the execution has not been instructed by the user, the API generation/execution program 415 directly terminates the processing of this flowchart.

In S1303, the agent program 413 waits for a response from the MFP 100 to the setting confirmation API transmitted in S617. Upon receiving the response, the processing proceeds to S1304, the agent program 413 accepts the response from the MFP 100, the CPU 401 displays the response on the display unit 410, and terminates the processing of this flowchart.

### <Screen example>

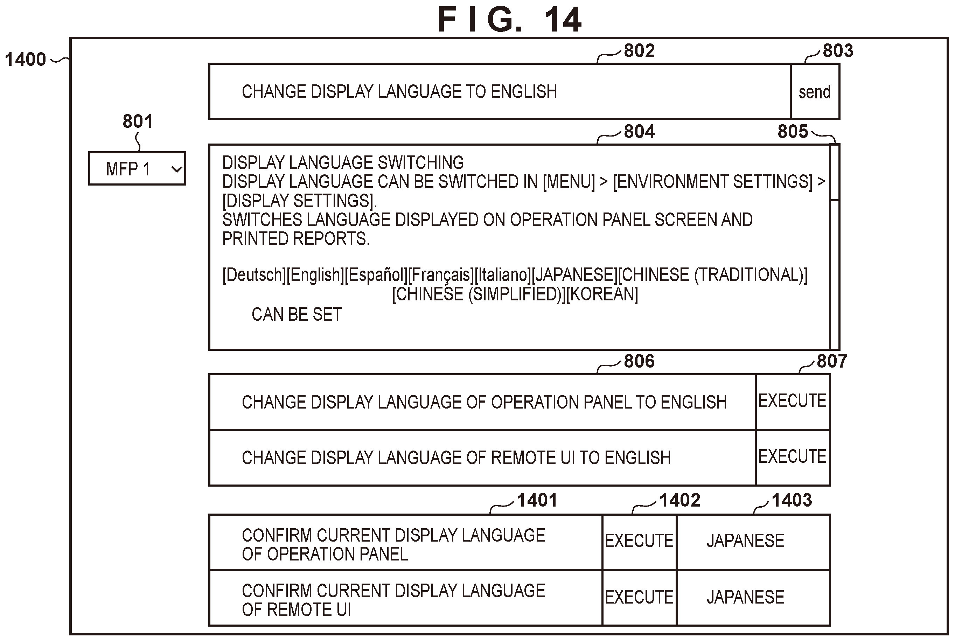

Referring to FIG. 14, the screen example displayed on the display unit 410 by the agent program 413 of the PC 400 according to the present embodiment will be described. Configurations similar to those of the screen 800 illustrated in FIG. 8 are denoted by the same numbers, and the descriptions are omitted.

A screen 1400 illustrated in FIG. 14 is configured to include a setting confirmation item field 1401, a setting confirmation item execution button 1402, and a setting confirmation field 1403, for settings of the MFP 100 in addition to a configuration of the screen 800. The setting confirmation item field 1401 is display of items currently set by the MFP 100. The setting confirmation item field 1401 is an item for clearly displaying items that the API generation/execution program 415 generates from the response from the language model server 300 and that the MFP 100 can check settings of the MFP 100 via the network 500, to the user as the candidate. When the user operates the setting confirmation item execution button 1402, the API generation/execution program 415 executes a command for making a request for confirmation to the MFP 100, and displays a confirmation response in the setting confirmation field 1403.

### <Response example>

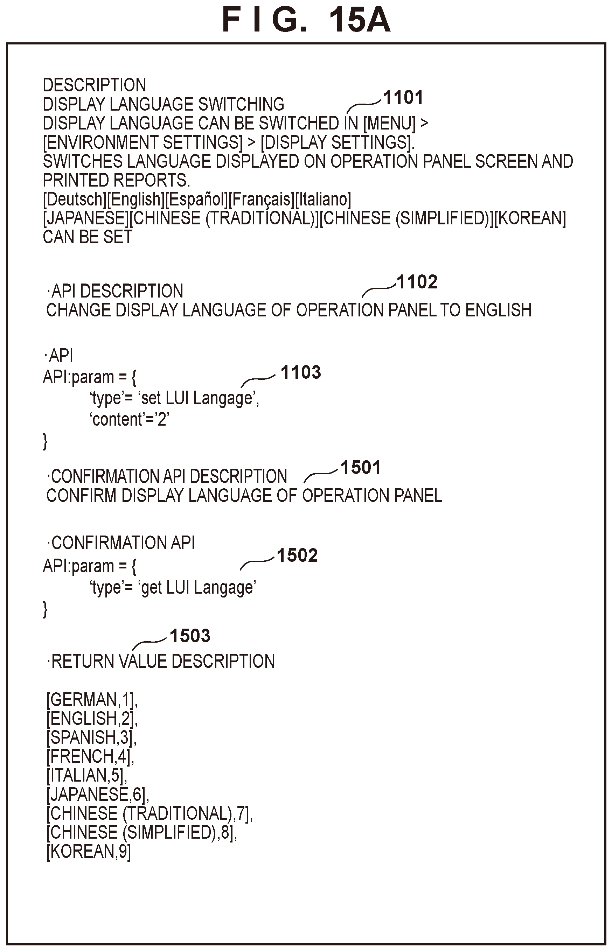

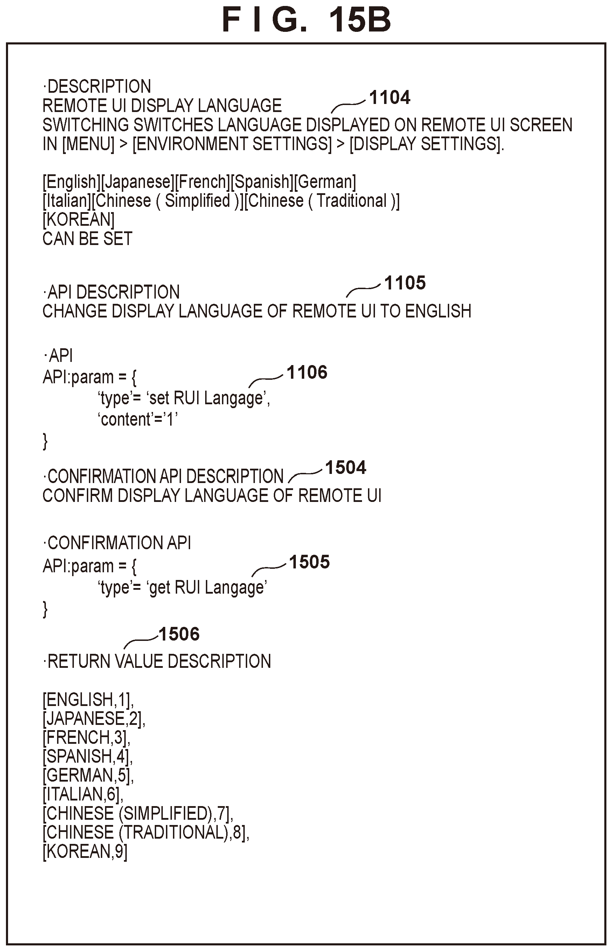

Referring to FIGS. 15A and 15B, a response example from the language model server 300 to the prompt transmitted by the PC 400 according to the present embodiment will be described. Configurations similar to those in the response example illustrated in FIG. 11 are denoted by the same numbers, and the descriptions are omitted. In the present embodiment, in addition to the response example (description 1101) illustrated in FIG. 11, confirmation API description 1501, confirmation API 1502, and return value description 1503 are added.

The confirmation API description 1501 is a description of the confirmation API 1502 for confirming the settings of the MFP, and is displayed in the setting confirmation item field 1401. The confirmation API 1502 is used by the API generation/execution program 415 of the PC 400 to generate an API that can be executed by the MFP 100 according to this description. The return value description 1503 indicates a setting confirmation value received as a result of the API generation/execution program 415 executing on the MFP 100 according to the confirmation API 1502. The agent program 413 refers to the return value description 1503 to display it as indicated in the setting confirmation field 1403 on the display unit 410.

Confirmation API description 1504 is a description of a confirmation API 1505 for confirming the settings of the MFP. The confirmation API 1505 is used by the API generation/execution program 415 of the PC 400 to generate the API that can be executed by the MFP 100 according to this description. Return value description 1506 indicates the setting confirmation value received as the result of the API generation/execution program 415 executing on the MFP 100 according to the confirmation API 1502. The agent program 413 refers to the return value description 1506 to display it as indicated in the setting confirmation field 1403 on the display unit 410.

As described above, the computer program according to the present embodiment further causes the computer of the information processing device to function to acquire the status information of the device from the specified device. Furthermore, the computer program causes the computer to function to provide the user with the status information of the device via the display unit. This allows the user to easily check a current status of the specified MFP.

### <Third Embodiment>

### <Sequence>

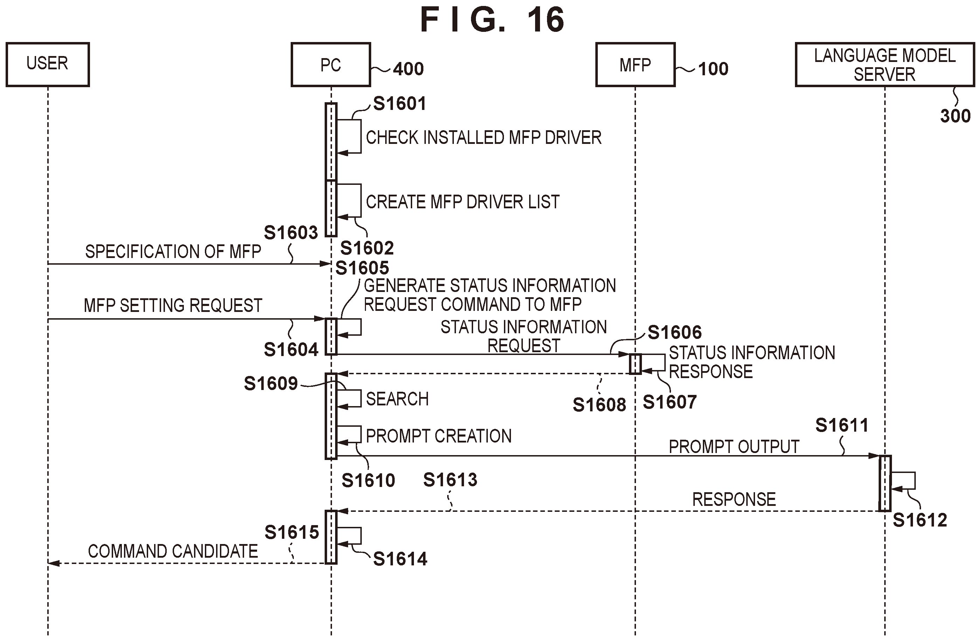

A third embodiment of the present invention will be described below. In the above embodiments, a form that supports the setting operation of the MFP was described, but application of the present invention is not limited to setting, but can be applied to various operations. Therefore, in the present embodiment, operation support for investigating a cause of an error or warning of the MFP 100 in response to dialogue with the user will be described. Referring to FIG. 16, sequence for investigating the cause of the error or warning of the MFP 100 in the present embodiment will be described. Since processing of S1601 to S1606 is the same as processing of S501 to S506 in FIG. 5, the descriptions are omitted.

In S1607, the MFP 100 acquires the status information including current errors and settings in response to the status request command received in S1606, and transmits it back to the PC 400 in S1608. In S1609, the agent program 413 selects data of the specified MFP type from the list of the MFP models in the data storage 414 based on an investigation request for the errors and warnings requested in S1604, and searches for similar information within the data. The search here, for example, if the setting request is "cannot transmit FAX", involves searching for items matching "FAX" and "cannot transmit".

Next, in S1610, the agent program 413 generates a prompt to query the language model server 300, and in S1611, it transmits the generated prompt to the language model server 300. In S1612, the language model program 308 of the language model server 300 receives the prompt generated in S1610 via the communication connector 306 and the communication unit I/F 305, and generates the response. In S1613, the agent program 413 receives the response generated by the language model server 300, generates a screen for the user showing the cause of the errors and warnings and the method for dealing with them according to the response received in S1614, and displays the screen on the display unit 410 in S1615.

### <Screen example>

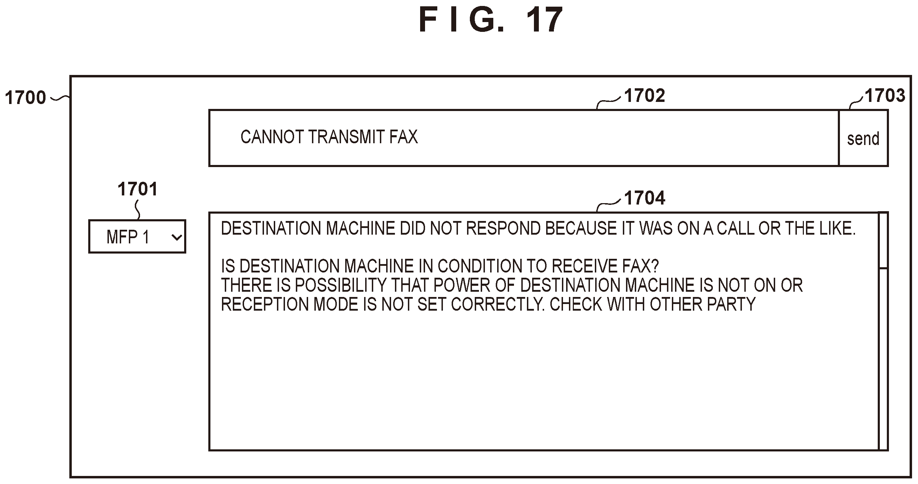

Referring to FIG. 17, a screen example displayed on the display unit 410 by the agent program 413 of the PC 400 according to the present embodiment will be described. A screen 1700 is configured to include an MFP selection item 1701, a prompt input item 1702, a prompt transmission button 1703, and a response field 1704.

The MFP selection item 1701 is a selection item for the user to select a driver list which the user operates. The user specifies the MFP experiencing a problem from the options. When an MFP is specified, the agent program 413 acquires information such as errors and warnings from the specified MFP.

The prompt input item 1702 is an item in which the user enters the problem or the like occurring in the MFP 100 using natural language. When the prompt transmission button 1703 is pressed, the agent program 413 selects the MFP data set in the MFP selection item 1701 from the data storage 414, and searches for items related to the error information of the MFP 100 and the problem input by the user within the MFP data. The search method may be any known search method. The agent program 413 creates a request to generate the API along with the search results, and the MFP 100 problems input by the user in the prompt input item 1702, and transmits it to the language model server 300. The response field 1704 is an area for displaying the response from the language model server 300.

As described above, in the computer program according to the present embodiment, the request relates to the operation performed when investigating the cause of the errors and warnings of the device, and the response to the request includes a method for dealing with the errors and warnings. In this way, according to the present embodiment, the user can be suitably supported not only in operation settings, but also in operation methods for resolving the errors and the like or the method for dealing with them.

### <Other Embodiments>

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority based on Japanese Patent Application No. 2024-009604 filed on January 25, 2024, the entire contents of which are incorporated herein by reference.

### REFERENCE SIGNS LIST

100: MFP, 200: Internet, 300: language model server, 400: PC, 500: network.

## Claims

1. A computer program causing a computer to function as:
accepting means for accepting a request in natural language from a user, the request specifying a device and relating to an operation of the device;
input means for inputting, to a language model server, a prompt that is based on the request, and operation information of the device; and
providing means for providing the user with a response generated by the language model server based on the prompt and the operation information of the device, via a display unit.

2. The computer program according to claim 1, further causing the computer to function as search means for searching for operation information regarding the request from storage means storing operation information of the specified device.

3. The computer program according to claim 2, wherein, for each of operation items, the storage means stores, as the operation information, an operation method of the device and a description of the operation method, and identification information of an API for executing the operation method.

4. The computer program according to claim 3, wherein t the response includes information indicating an operation method related to the request and identification information of one or more APIs for executing predetermined processing related to the request on the device.

5. The computer program according to claim 4, wherein t the providing means provides the one or more APIs on the display unit in a selectable manner.

6. The computer program according to claim 5, wherein
the providing means provides the user with information by displaying an interactive screen on the display unit, and
the interactive screen includes:
an area for inputting the request in natural language from the user and an object for executing the request;
an area for displaying the response; and
an area for displaying the one or more APIs and an object for selecting the one or more APIs.

7. The computer program according to claim 6, further causing the computer to function as execution means for executing an API selected from the one or more provided APIs according to a user operation.

8. The computer program according to any one of claims 1 to 7, further causing the computer to function as acquisition means for acquiring, from a specified device, status information of the device, wherein
the providing means further provides the user with the status information of the device via the display unit.

9. The computer program according to claim 8, wherein
the request relates to an operation performed when investigating a cause of an error or a warning of the device, and
the response includes a method for dealing with the error or the warning.

10. The computer program according to any one of claims 1 to 7, wherein
in a case where the request is a setting operation for the device, the response further includes identification information of one or more APIs that check a setting status of a setting item corresponding to the request in the device, and
the providing means further provides the one or more APIs on the display unit in a selectable manner.

11. An information processing device comprising:
accepting means for accepting a request in natural language from a user, the request specifying a device and relating to an operation of the device;
input means for inputting, to a language model server, a prompt that is based on the request, and operation information of the device; and
providing means for providing the user with a response generated by the language model server based on the prompt and the operation information of the device, via a display unit.

12. An information processing method comprising:
an accepting step of accepting a request in natural language from a user, the request specifying a device and relating to an operation of the device;
an input step of inputting, to a language model server, a prompt that is based on the request, and operation information of the device; and
a providing step of providing the user with a response generated by the language model server based on the prompt and the operation information of the device, via a display unit.
